Europäisches Patentamt

European Patent Office

Office européen des brevets

(11) Numéro de publication: **0 191 657**
**A1**

# (12) DEMANDE DE BREVET EUROPEEN

(21) Numéro de dépôt: 86400022.9

(51) Int. Cl.⁴: **G 01 S 1/56**

(22) Date de dépôt: 07.01.86

(30) Priorité: 11.01.85 FR 8500402

(71) Demandeur: **THOMSON-CSF, 173, Boulevard Haussmann, F-75379 Paris Cedex 08 (FR)**

(72) Inventeur: **Grousseau, Alain, THOMSON-CSF SCPI 173, bld Haussmann, F-75379 Paris Cedex 08 (FR)**
Inventeur: **Hetyel, Joseph, THOMSON-CSF SCPI 173, bld Haussmann, F-75379 Paris Cedex 08 (FR)**
Inventeur: **Letoquart, Bruno, THOMSON-CSF SCPI 173, bld Haussmann, F-75379 Paris Cedex 08 (FR)**

(43) Date de publication de la demande: 20.08.86
**Bulletin 86/34**

(84) Etats contractants désignés: **DE GB IT**

(74) Mandataire: **Benoit, Monique et al, THOMSON-CSF SCPI 19, avenue de Messine, F-75008 Paris (FR)**

(54) Procédé de synchronisation radioélectrique de stations d'un système d'aide à l'atterrissage de type MLS par une station DME, et dispositifs de mise en oeuvre d'un tel procédé.

(57) L'invention a pour objet un procédé de synchronisation radioélectrique de station S MLS par la station DME associée.

Selon ce procédé, l'une des stations MLS (azimut par exemple) est choisi comme station maître; elle transmet la synchronisation ($S_{YA}$) à la station DME (D) qui, implantée à proximité, envoie radioélectriquement cette information de synchronisation ($S_{YD}$) à un récepteur DME ($D_S$) implanté à côté de la station MLS esclave (site par exemple). L'information de synchronisation transmise est codée sous forme d'une pluralité d'impulsions successives, dont l'espacement est différent de celui des impulsions des émissions DME classiques.

# PROCEDE DE SYNCHRONISATION RADIOELECTRIQUE DE STATIONS D'UN SYSTEME D'AIDE A L'ATTERRISSAGE DE TYPE MLS PAR UNE STATION DME, ET DISPOSITIFS DE MISE EN OEUVRE D'UN TEL PROCEDE

La présente invention concerne un procédé de synchronisation radioélectrique de stations d'un système d'aide à l'atterrissage du type MLS, telles que les stations azimut et site, par une station de type DME. L'invention a également pour objet des dispositifs de mise en oeuvre de ce procédé.

On rappelle qu'un système d'aide à l'atterrissage de type MLS (initiales de l'expression anglo-saxonne Microwave Landing System) permet de fournir à un aéronef différentes informations - appelées "fonctions" - sur sa position, notamment l'angle d'azimut et l'angle de site dans un repère lié à la piste d'atterrissage, ainsi que, éventuellement, d'autres fonctions annexes telles que l'azimut arrière par exemple, et un certain nombre de données, les unes dites "de base" et les autres dites "auxiliaires". Ces différentes informations sont émises par le système MLS en alternance, à partir du sol, en multiplexage temporel sur une même fréquence, voisine de 5 GHz, selon des caractéristiques normalisées par l'Organisation de l'Aviation Civile Internationale (OACI), annexe 10, paragraphe 3-11.

Chacune de ces informations se décompose en deux parties, émises successivement :

- un préambule, dont le rôle principal est de fournir à l'aéronef une identification de l'émission qui va suivre immédiatement ; ce préambule est émis par une antenne dite sectorielle, c'est-à-dire une antenne à diagramme rayonnant fixe couvrant l'ensemble de la zone, ou secteur, couverte par le système MLS. Le préambule se présente sous la forme d'un mot binaire émis en modulation de phase différentielle DPSK (pour Differential Phase Shift Keying en anglais), selon les normes OACI ;

- l'information proprement dite ; dans le cas d'une information angulaire, elle est émise à l'aide d'une antenne à balayage électronique, selon le principe connu du faisceau battant à référence temporelle (Time Reference Scanning Beam, TRSB, en anglais).

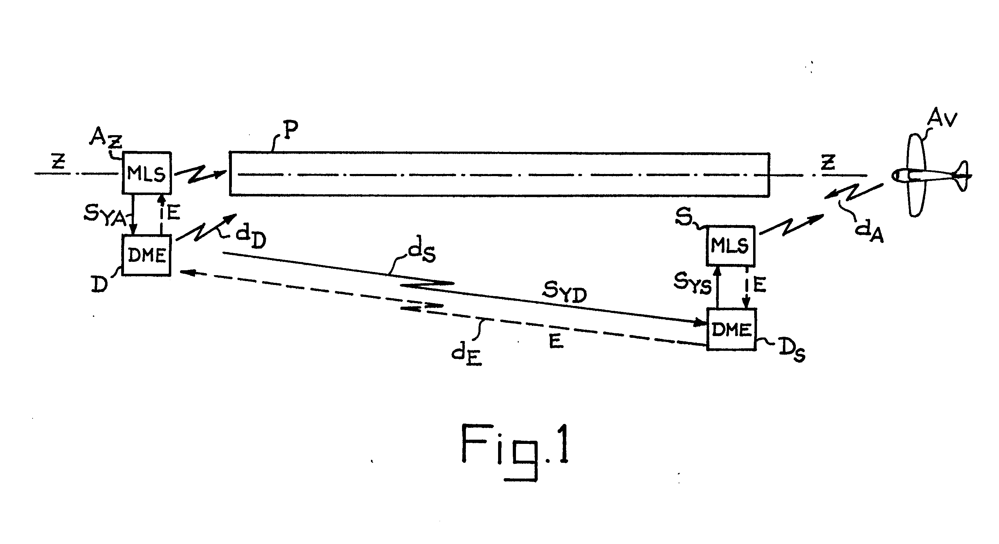

La figure 1 représente une disposition fréquente des stations MLS azimut et site autour d'une piste d'atterrissage.

La station azimut ($A_z$) est proche de l'extrémité de la piste, repérée P et d'axe ZZ. Cette station émet en direction de la piste P, permettant ainsi à l'aéronef ($A_v$) de disposer de l'information angulaire d'azimut durant tout l'atterrissage, et cela même durant la phase de roulement sur la piste.

La station site (S) émet dans la même direction mais elle est par contre proche du seuil d'entrée de la piste P, permettant à l'aéronef $A_v$ d'être guidé sur une trajectoire à angle de site constant durant l'atterrissage, et d'être amené par cette trajectoire en entrée de piste.

De ce fait, les stations azimut et site sont généralement placées l'une par rapport à l'autre à une distance de plusieurs kilomètres.

Un système MLS peut comporter d'autres stations (azimut arrière, données), non représentées sur la figure 1.

En outre, un système d'aide à l'atterrissage de type MLS comporte en principe un équipement de mesure de distance appelé DME (pour Distance Measuring Equipement en anglais), implanté soit dans l'une des stations MLS azimut ou site, soit à proximité de l'une d'elles. A titre d'exemple, on a représenté sur la figure 1 une station DME repérée D, placée à proximité de la station azimut $A_z$. La station D fournit en permanence à l'aéronef $A_v$ la distance qui le sépare de la station D (c'est-à-dire de l'extrémité de la piste P dans le cas de la figure 1), y compris dans sa phase de roulement sur la piste.

Le fonctionnement d'un système DME est le suivant : l'aéronef ($A_v$) porte un interrogateur DME qui interroge la station au sol (D), appelée transpondeur. Le message d'interrogation est constitué par

3

une paire d'impulsions dont l'espacement et la fréquence porteuse sont définis par les normes OACI et connus du transpondeur. Lorsque le transpondeur reçoit et reconnait ces impulsions, il émet une réponse à destination de l'aéronef. La réponse est également une paire d'impulsions, d'espacement et de fréquence porteuse connus de l'interrogateur, émises avec un retard constant et connu, le tout étant également défini par les normes OACI. Lorsque l'interrogateur de l'aéronef reçoit et reconnait ces impulsions de réponse, il déduit la distance qui le sépare de la station DME de la durée du trajet aller-retour des impulsions.

La station DME fonctionne, selon les normes OACI, sur une fréquence (voisine de 1 GHz) complètement distincte de celle des stations MLS (voisine de 5 GHz). Par contre, le fonctionnement en temps partagé sur une même fréquence des différentes stations MLS impose l'existence d'une liaison de synchronisation en temps entre ces stations MLS, pour assurer le non-recouvrement des émissions. En général, c'est la station azimut qui joue le rôle de station maître, mais cela n'est pas obligatoire. La station maître doit donc envoyer des signaux de synchronisation vers les autres stations MLS, dites stations esclaves, pour leur permettre d'émettre à l'instant voulu.

Cette synchronisation de stations MLS entre elles peut être réalisée par liaison physique, câble électrique ou fibre optique par exemple. Mais elle présente alors l'inconvénient d'être onéreuse en raison des travaux de génie civil qu'elle entraîne, notamment la construction de tranchées sur des distances pouvant atteindre plusieurs kilomètres.

L'invention a pour objet un procédé évitant cet inconvénient par le fait qu'il assure la synchronisation radioélectriquement. Plus précisément, il assure la synchronisation d'au moins une station MLS (station esclave) par la station DME associée à une autre station du système MLS, jouant le rôle de station maître, selon le procédé tel que défini par la revendication 1.

Elle a également pour objet une station DME et un récepteur de type DME pour la mise en oeuvre de ce procédé, tel que défini respectivement par les revendications 5 et 6.

D'autres objets, particularités et résultats de l'invention ressortiront de la description qui suit, illustrée par les dessins annexés qui représentent :

- la figure 1, le schéma général d'implantation et d'émission des stations MLS et DME ;

- la figure 2, le schéma général d'une station MLS émettant une fonction angulaire ;

- la figure 3, le schéma général d'une station DME (transpondeur) ;

- les figures 4, a à c, des modes de réalisation de la station DME (transpondeur) utilisée dans le procédé selon l'invention, et des diagrammes de signaux s'y rapportant ;

- la figure 5, un mode de réalisation d'un récepteur de type DME associé à une station MLS esclave, utilisé dans le procédé selon l'invention.

Sur ces différentes figures, les mêmes références se rapportent aux mêmes éléments.

La figure 1 représente donc l'organisation générale du système MLS-DME, synchronisé selon l'invention.

Outre les éléments déjà décrits, à savoir la piste P, les stations MLS azimut $A_Z$ et site S et la station DME (transpondeur) D, le système selon l'invention comporte en outre une station réceptrice $D_S$ de type DME, implantée dans la station esclave (site) ou à proximité de celle-ci.

5

On a représenté par une flèche $d_D$ l'émission DME classique du transpondeur D vers l'aéronef $A_V$, et par une flèche $d_A$ l'émission inverse.

Selon l'invention, pour synchroniser une ou plusieurs stations MLS esclaves sur une station MLS maître, la station DME D émet en outre une information de synchronisation, appelée $S_{YD}$, à l'intention d'un récepteur de type DME, noté $D_S$ et situé dans chacune des stations MLS esclaves ou à proximité de celles-ci ; dans l'exemple de la figure 1, il n'y a qu'une station esclave, la station site S, et cette émission est représentée par une flèche $d_S$. Cette émission de synchronisation se fait sur commande, notée $S_{YA}$, de la station MLS maître (la station azimut). La station DME D étant placée dans l'exemple de la figure 1 à proximité de la station azimut, mais non à l'intérieur de celle-ci, il doit être réalisé une liaison entre ces deux stations, par câble de préférence. A l'autre extrémité de la piste, le récepteur DME $D_S$ étant placé (toujours dans l'exemple de la figure 1) à proximité de la station site, c'est-à-dire à une distance de l'ordre de quelques mètres, la liaison nécessaire entre les deux stations se fait également de préférence par câble. L'information de synchronisation reçue par le récepteur DME $D_S$ et transmise à la station MLS S est notée $S_{YS}$.

Il est à noter que l'impulsion de synchronisation doit être émise par la station maître un temps (T) suffisant avant l'instant d'émission de la station esclave, le temps T étant défini par

$T = T_D + T_C + T_P$, avec :

- $T_D$ : temps de propagation entre les stations DME (D) et MLS esclave (S),

- $T_C$ : durée de l'information de sychronisation codée,

- $T_P$ : temps de protection de synchronisation, pendant lequel il n'est procédé à aucune autre émission (de l'ordre de $\pm 10$ µs).

Selon une variante de réalisation de l'invention, la station MLS esclave (station site) transmet en outre l'état E de fonctionnement ou de non fonctionnement dans lequel elle se trouve à la station maître (station azimut), cette transmission se faisant également par

6

l'intermédiaire de la station DME comme représenté par les flèches en pointillés sur la figure 1 : par câble, la station site S transmet son état E à la station DME $D_S$, laquelle transmet cette information à la station DME D par la voie radioélectrique (flèche $d_E$) ; à réception de cette information d'état, la station DME D la transmet à la station azimut $A_Z$ par câble également.

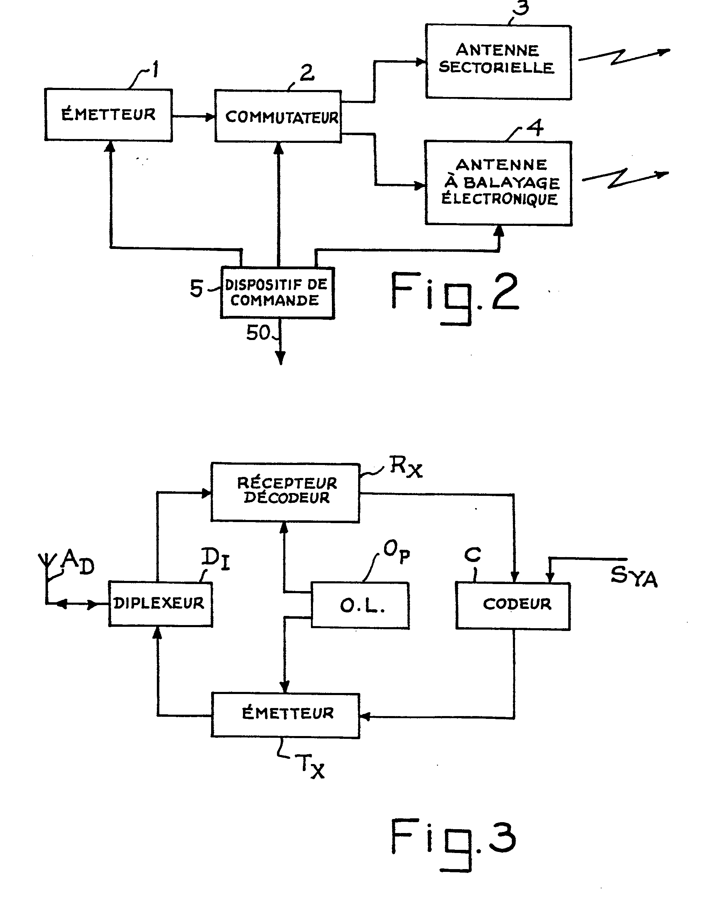

Afin de réaliser ces différentes fonctions, le système selon l'invention utilise donc un transpondeur DME (D) de type classique, auquel on rajoute un codeur particulier adapté à l'émission de l'information de synchronisation $S_{YD}$ et, le cas échéant, un décodeur particulier pour la réception de l'information d'état E, et au moins une station supplémentaire de type DME, implantée à proximité de la ou des stations MLS esclaves, comportant principalement un récepteur et un décodeur de l'information de synchronisation, auxquels s'ajoutent de préférence une horloge locale et un système d'asservissement de cette horloge sur l'horloge de la station maître et, le cas échéant, un ensemble d'émission de l'information d'état E de la station esclave. Avant de décrire ces différentes stations DME dans leur utilisation à la synchronisation (figures 3 à 5), on décrit ci-après plus en détails le système MLS.

La figure 2 est un schéma de l'organisation générale classique d'une station angle d'un système MLS, azimut ou site par exemple.

Cette station comporte essentiellement un émetteur 1, deux antennes : une antenne sectorielle 3 et une antenne à balayage électronique 4, et des circuits de commande (2, 5).

L'émetteur 1 comporte classiquement, en cascade :

- un générateur de fréquence, constitué par exemple par un synthétiseur de fréquence fournissant une onde voisine de 5 GHz selon la norme OACI (on rappelle que, selon cette norme, une fréquence parmi 200 fréquences prédéfinies, voisine de 5 GHz, est affectée à chaque station MLS) ;

- un modulateur de phase, réalisant une modulation de phase DPSK à deux états (O,$\pi$) permettant d'émettre le préambule et les données sur commande d'un dispositif logique de commande 5, tel qu'un microprocesseur ;

    - un dispositif de commande marche/arrêt, également commandé par le microprocesseur 5 ;

    - un émetteur de puissance, réalisé à l'aide de tubes ou de transistors selon la puissance requise, qui est classiquement de l'ordre de 20W et donc le plus souvent réalisé à l'aide de transistors.

L'émetteur 1 fournit un signal, par l'intermédiaire d'un commutateur 2, soit à l'antenne sectorielle 3 pour l'émission du préambule et des données, de base ou auxiliaires, soit à l'antenne à balayage 4.

Cette dernière (4) se décompose, classiquement, en un diviseur (ou répartiteur) de puissance, divisant la puissance reçue du commutateur 2 en N afin d'alimenter N déphaseurs numériques, lesquels alimentent N éléments rayonnants ; les valeurs des déphasages introduits par les déphaseurs sont commandées par un circuit logique de balayage, afin de réaliser un balayage électronique à partir d'éléments rayonnants statiques.

L'ensemble de la station est donc commandée par le microprocesseur 5 et sa mémoire, connecté à l'émetteur 1, au commutateur 2 et à l'antenne à balayage 4, par l'intermédiaire de son circuit logique de balayage, le microprocesseur 5 fournissant au circuit logique de balayage l'instant de départ du balayage pour les fonctions angle. En outre, dans le cas de la station maître, le microprocesseur 5 fournit (flèche 50) le signal de synchronisation $S_{YA}$ à la station DME D. Dans le cas d'une station esclave, il fournit, le cas échéant, une information E sur l'état de la station à la station DME $D_S$.

Plus précisément, selon un mode de réalisation, on définit dans le microprocesseur 5 un "mot d'état" de la station, chaque bit de ce mot représentant une commande ; dans l'exemple ci-dessus, ce mot comporte au moins six bits, commandant respectivement :

    - le modulateur et le dispositif de commande de l'émetteur 1 ;

    - le commutateur 2 ;

8

- la logique de balayage de l'antenne 4 (2 bits) ;

- la synchronisation de la station esclave, dans le cas de la station maître.

Chacune des stations MLS émet donc à tour de rôle selon un séquencement prédéfini et périodique, normalisé par l'OACI, appelé cycle et dont la durée est de 615 ms.

La génération en temps réel d'un cycle MLS revient à engendrer en temps réel le mot d'état dans le microprocesseur, qui réalise ensuite les différentes commandes. A cet effet, on range dans une table de la mémoire du microproccesseur 5 la succession des mots d'état correspondant au cycle désiré. Au rythme d'une horloge convenable, le microprocesseur 5 va chercher les mots d'état successifs et les fournit à une interface (non représentée), du type PIA (pour "Parallel Interface Adapter") par exemple, qui commande les divers blocs de la station MLS.

La figure 3 représente le schéma général d'un transpondeur D de type DME.

Un tel transpondeur comporte une antenne $A_D$, susceptible d'émettre et recevoir des émissions DME sur les fréquences normalisées, voisines de 1 MHz ; elle est reliée à un diplexeur $D_I$, dont la fonction est, ainsi qu'il est connu, d'assurer la liaison de l'antenne $A_D$ alternativement avec un récepteur $R_X$ et un émetteur $T_X$ du transpondeur D. Le récepteur $R_X$ a pour fonction d'amplifier et de détecter les impulsions dans les signaux reçus par l'antenne $A_D$, ainsi que de décoder ces signaux, c'est-à-dire de ne prendre en considération que ceux qui ont pour fréquence porteuse la fréquence DME affectée au transpondeur considéré et que les paires d'impulsions dont l'espacement correspond à l'espacement DME normalisé.

Losque un signal reçu a été reconnu par le récepteur $R_X$ comme des impulsions d'interrogation DME, le transpondeur doit élaborer une réponse, constituée elle aussi par deux impulsions émises à une fréquence déterminée et espacées d'un intervalle de temps déterminé. Ces impulsions de réponse sont élaborées dans un codeur C, sur commande du récepteur $R_X$. Elles sont transmises à l'émetteur $T_X$ pour émission par l'antenne $A_D$ via le diplexeur $D_r$.

L'émetteur $T_X$ et le récepteur $R_X$ sont pilotés par un oscillateur local $O_p$, qui fournit à l'émetteur $T_X$ la fréquence d'émission du transpondeur (voisine de 1 GHz) et au récepteur $R_X$ la fréquence nécessaire au changement de fréquence (on rappelle que si la fréquence d'émission du transpondeur est égale à $F_o$, la fréquence d'émission de l'interrogateur de l'aéronef est égale à $F_o \pm 63$ MHz).

Selon l'invention, le transpondeur D a également pour fonction d'émettre une information de synchronisation ($S_{YD}$) à destination du récepteur DME $D_S$ (figure 1). A cet effet, il reçoit de la station azimut $A_Z$ un signal de synchronisation $S_{YA}$ qui, appliqué au codeur C, déclenche par celui-ci l'émission de l'information de synchronisation sous forme d'impulsions, dont le nombre et l'espacement sont choisis pour être distincts des impulsions DME classiques. Les impulsions de synchronisation élaborées par le codeur C sont ensuite transmises à l'émetteur $T_X$ puis à l'antenne $A_D$ comme les impulsions classiques.

On rappelle que les normes OACI définissent 200 canaux MLS "angle", situés entre 5031 MHz et 5090,7 MHz, espacés de 300 KHz. A chaque canal "angle" est associé un canal DME, défini par sa fréquence (entre 962 et 1150 MHz par pas de 1 MHz) et son code, c'est-à-dire l'espacement entre deux impulsions d'une paire (quatre codes distincts entre 12 et 42 µs, la largeur de l'impulsion DME à mi-hauteur étant de 3,5 µs).

L'information de synchronisation est émise sur la fréquence de réponse affectée au transpondeur considéré, sous forme d'au moins deux impulsions, avec un code différent de ceux qui sont utilisés par le DME. En pratique, pour réduire la probabilité d'avoir de fausses informations de synchronisation dues à l'émission des paires d'impulsions DME, il est préférable d'utiliser trois impulsions, ou davantage, mais le nombre de trois constitue un bon optimum entre sécurité et simplicité. En outre, dans le même esprit, il est préférable d'utiliser

10

des espacements entre impulsions supérieurs à l'espacement DME maximum, à savoir 42 µs. Une autre possibilité consiste à utiliser des espacements plus courts, mais avec un plus grand nombre d'impulsions.

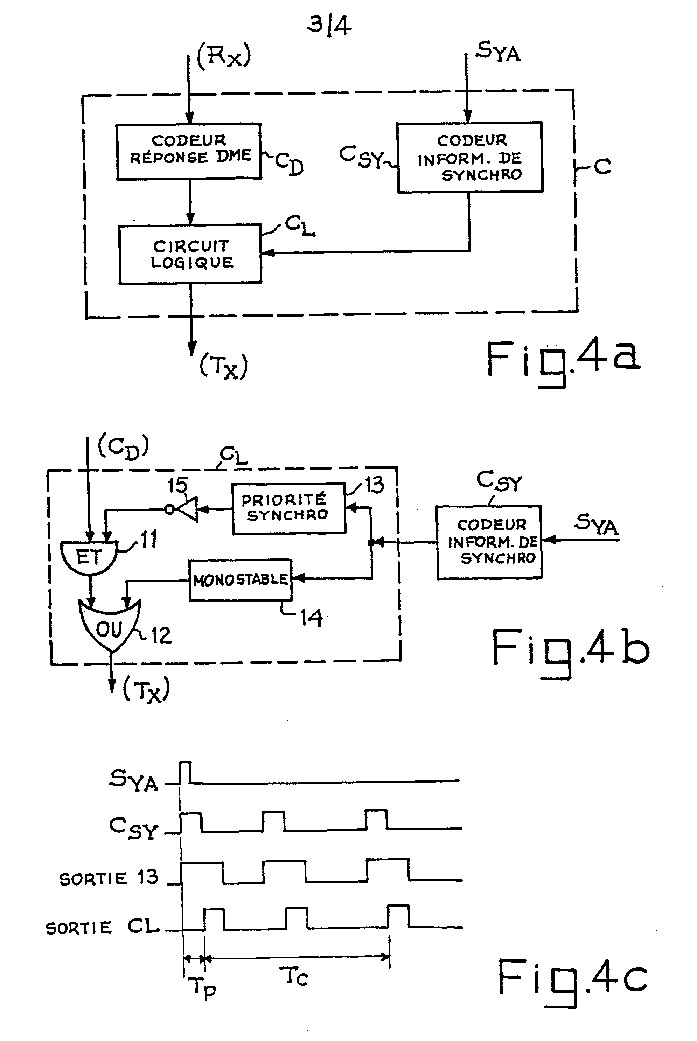

La figure 4a est le schéma d'un mode de réalisation du dispositif de codage C selon l'invention, assurant la génération à la fois des impulsions de réponse classiques du transpondeur DME et des impulsions de synchronisation.

Le dispositif C comporte donc un codeur $C_D$ élaborant la réponse classique d'un transpondeur DME, recevant un ordre d'émission du récepteur $R_X$ et transmettant les impulsions qu'il a élaborées à l'émetteur $T_X$, et plus précisément au modulateur qu'il comporte par l'intermédiaire d'un circuit logique $C_L$. Le dispositif C comporte un second codeur $C_{SY}$ qui a pour fonction, sur réception du signal de synchronisation $S_{YA}$ en provenance de la station azimut $A_Z$, d'engendrer les impulsions de synchronisation à destination de l'émetteur $T_X$, via le circuit logique $C_L$ qui permet d'éviter tout conflit d'accès à l'émetteur $T_X$ entre les deux codeurs $C_D$ et $C_{SY}$. Le codeur $C_{SY}$ peut avantageusement être réalisé comme le codeur $C_D$, lequel, classiquement, est réalisé à partir d'un registre à décalage ou d'un compteur.

La figure 4b, représente un mode de réalisation du circuit logique $C_L$.

Dans ce mode de réalisation, le circuit $C_L$ comporte : deux portes logiques, l'une du type ET repérée 11 et l'autre du type OU non exclusif repérée 12 ; un circuit 13 tel qu'un monostable, permettant d'engendrer un signal assurant la priorité des informations de synchronisation sur les informations en provenance du codeur $C_D$ ; un inverseur 15 placé en sortie du circuit 13, et un circuit 14, tel qu'un monostable, connecté entre les codeur $C_{SY}$ et la porte OU 12.

Le fonctionnement de ce circuit est le suivant, illustré par les diagrammes de la figure 4c : sur commande de l'impulsion de

11

synchronisation $S_{YA}$, représentée sur la première ligne de la figure 4c, le codeur de synchronisation $C_{SY}$ engendre une série d'impulsions représentant l'information de synchronisation ; trois de ces impulsions sont représentées à titre d'exemple sur la deuxième ligne de la figure 4c. Ces impulsions sont appliquées d'une part au circuit 13 et d'autre part à une entrée de la porte OU 12, par l'intermédiaire du monostable 14. En présence d'informations de synchronisation à transmettre, les dispositifs 13 et 15 engendrent des signaux (représentés figure 4c à la sortie du circuit 13) tels qu'ils inhibent, par l'intermédiaire de la porte ET 11, le passage des signaux en provenance du codeur $C_D$ ; les signaux de synchronisation passent alors par la porte OU 12, par l'intermédiaire du monostable 14. En l'absence d'information de synchronisation, les informations en provenance du codeur $C_D$ parviennent à l'émetteur $T_X$ par l'intermédiaire successivement des portes ET 11 et OU 12. La fonction du circuit 14 est de conférer un retard aux impulsions de synchronisation issues du codeur $C_{SY}$, comme représenté sur la dernière ligne de la figure 4c, afin d'éviter toute coïncidence avec une impulsion DME en provenance du codeur $C_D$ ; la valeur du retard ainsi conféré, de l'ordre de 10 µs, constitue le temps de protection de synchronisation $T_P$ mentionné plus haut.

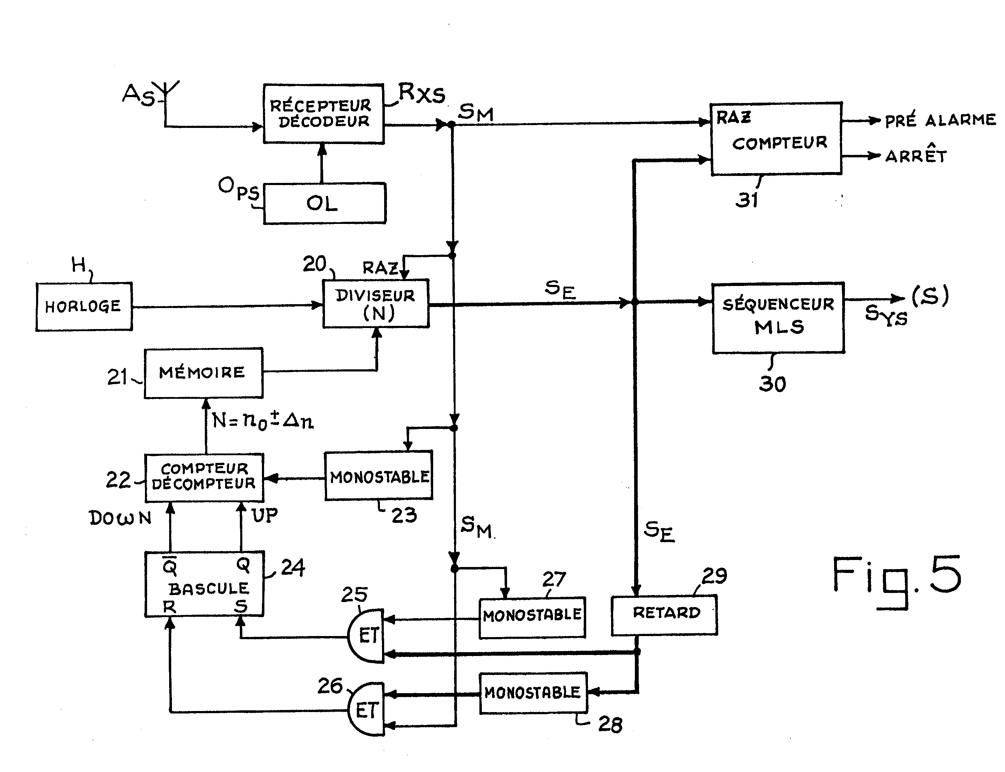

La figure 5 représente le schéma d'un mode de réalisation du récepteur DME $D_S$ utilisé pour la synchronisation d'une station MLS esclave.

Ce récepteur $D_S$ comporte les éléments classiques d'un récepteur DME, à savoir : une antenne repérée $A_S$ et un récepteur, détecteur et décodeur $R_{XS}$, piloté par un oscillateur local $O_{PS}$. Il comporte en outre un dispositif 30, appelé séquenceur MLS ; la fonction de ce séquenceur 30 est de dérouler le cycle MLS à partir de la réception des informations de synchronisation ; il est réalisé par exemple à l'aide d'un microprocesseur et fournit l'information de synchronisation $S_{YS}$ à la station MLS esclave, la station site S dans cet exemple, information de synchronisation qui déclenchera l'émission de la fonction MLS par la station esclave.

12

L'antenne $A_S$ est une antenne directive, orientée vers la station DME D et susceptible de recevoir ses émissions. Le récepteur $R_{XS}$ a pour fonction d'amplifier, de détecter les signaux reçus par l'antenne $A_S$ et de décoder et reconnaître les impulsions reçues afin de fournir une impulsion de synchronisation $S_M$ à chaque fois que la suite d'impulsions de synchronisation attendue est reçue de la station maître, via la station DME. Dans un mode de réalisation (non représenté), l'impulsion $S_M$ est directement utilisée pour le déclenchement du séquenceur MLS 30.

Dans un mode de réalisation préféré, illustré sur la figure 5, le récepteur $D_S$ comporte en outre une horloge H et un ensemble de circuits électroniques 20 à 29 destinés à engendrer, à partir de la période de l'horloge H, un signal de synchronisation au début de chaque cycle MLS, ainsi qu'à asservir cette horloge H sur le signal de synchronisation reçu par le récepteur $R_{XS}$.

Afin d'engendrer le signal de synchronisation de la station esclave, noté $S_E$, la fréquence de l'horloge locale H est divisée par un nombre N à l'aide d'un dispositif 20, réalisé par exemple par un compteur, afin de fournir une impulsion de synchronisation par périodes de 615 ms qui est, on le rappelle, la durée normalisée du cycle MLS.

L'asservissement de la référence de temps de la station $D_S$ est réalisé à la fois pour les dérives à court terme et pour les dérives à long terme.

La correction des dérives à court terme est réalisée en remettant à zéro (entrée RAZ) le compteur 20 par le signal de synchronisation $S_M$.

La correction des dérives à long terme de l'horloge H est effectuée en modifiant le rang de division du compteur 20 d'une valeur égale à $\pm \Delta n$ à l'aide des circuits 21 à 29, qui reçoivent les signaux $S_M$ et $S_E$.

Plus précisément, ces circuits comportent une bascule 24, du type RS, dont les entrées R et S reçoivent les signaux $S_M$ et $S_E$ par l'intermédiaire de deux portes ET, respectivement 26 et 25. Entre

13

les entrées des portes ET 25 et 26 et les signaux $S_M$ et $S_E$ sont connectés :

- un monostable 27 entre le signal $S_M$ et l'une des entrées de la porte 25 ;

- un élément à retard 29 entre le signal $S_E$ et la deuxième entrée de la porte 25 ;

- un monostable 28 entre la sortie de l'élément à retard 29 et la première entrée de la porte 26, la deuxième entrée de cette même porte recevant directement le signal $S_M$.

Avant la réception d'une impulsion de synchronisation, les deux monostables 27 et 28 sont au repos, leur sortie étant au niveau 1.

Lorsque le signal de synchronisation $S_E$ apparaît avant le signal de synchronisation $S_M$ en provenance de la station maître, le signal $S_E$ passe la porte ET 25 et se présente à l'entrée S de la bascule 24. La sortie Q de cette bascule est reliée à une entrée de sélection (comptage ou décomptage) d'un compteur-décompteur 22 ; dans le cas présent, elle positionne le dispositif 22 de sorte qu'il compte vers les nombres croissants lorsqu'il reçoit une impulsion venant d'un monostable 23, lequel reçoit le signal $S_M$. Lorsque ce dernier signal est reçu par le monostable 23, il provoque donc l'accroissement d'une unité de la valeur initiale $n_o$ du compteur 22. Parallèlement, la présence du signal $S_E$ sur l'entrée du monostable 28 change l'état de sortie de ce dernier (qui passe au niveau 0) et interdit ainsi le passage de l'impulsion $S_M$ par la porte ET 26 : le signal $S_M$, arrivé dans cette hypothèse après le signal $S_E$, ne peut avoir ainsi d'effet sur la bascule 24. A la sortie du compteur-décompteur 22, un circuit mémoire 21 mémorise la valeur $N = n_o \pm \Delta n$

contenue dans le compteur 22 et positionne le diviseur 20 à la valeur N. Le rang de la division, dans l'exemple de fonctionnement décrit, s'étant accru d'une unité ($\Delta n = 1$), la période du signal $S_E$ devient plus longue et, à chaque fois que le signal $S_E$ arrive avant le signal $S_M$, le contenu du compteur 12 est ainsi augmenté d'une unité.

Lorsque la période $S_E$ devient égale ou supérieure à celle du signal $S_M$, un processus inverse s'établit et, par l'intermédiaire de la porte ET 26 et de l'entrée R de la bascule 24, le compteur-décompteur 22 décompte une unité à chaque fois que le signal $S_M$ arrive avant le signal $S_E$.

La fonction du circuit de retard 29 est la suivante : du fait que le signal $S_M$ remet à zéro le compteur 21 chaque fois qu'il est présent, une impulsion de sortie étant produite par ce compteur à chaque fois que son contenu est égal à zéro, il y aurait un signal $S_E$ à chaque fois qu'un signal $S_M$ est présent ; le circuit à retard 29, qui introduit un retard de l'ordre de quelques centaines de nano-secondes, considéré comme négligeable par rapport aux durées $T_P$ et $T_C$, permet d'assurer l'avance du signal $S_M$ sur le signal $S_E$.

On constate ainsi qu'en l'absence du signal de synchronisation $S_M$ émanant de la station maître, le compteur-décompteur 22, ne recevant pas d'impulsion du monostable 23, conserve son état et, par suite, le diviseur 20 conserve également son rang de division $N = n_o \pm \Delta n$ établi avant la disparition du signal $S_M$.

Dans une variante de réalisation, un autre compteur, repéré 31, est utilisé pour compter le temps d'autonomie de la station $D_S$ : il arrête l'émission de la station esclave lorsque celle-ci ne reçoit plus l'impulsion de synchronisation $S_M$ pendant un intervalle de temps prédéfini, et il est remis à zéro à chaque fois qu'une impulsion $S_M$ est reçue. Dans une variante de réalisation, le compteur 31 peut également fournir un signal de préalarme sur une valeur intermédiaire de son contenu.

Dans la variante de réalisation décrite figure 1 dans laquelle la station esclave, site par exemple, transmet une information sur son état à la station DME $D_S$, laquelle la retransmet à la station DME D de façon radioélectrique, à destination de la station maître $A_Z$, la station DME $D_S$ doit alors inclure en outre, de façon analogue à ce qui est représenté sur la figure 3, un circuit de codage codant l'information d'état de la station esclave selon un code spécifique, c'est-à-dire sous forme d'une série d'impulsions dont l'espacement est distinct des précédents, et un émetteur de cette information

15

codée, à la fréquence d'interrogation affectée à la station DME considérée, et la transmettant à l'antenne $A_S$ de la station $D_S$ par l'intermédiaire d'un diplexeur. Dans ce cas, la station DME D doit en outre comporter un décodeur adapté pour reconnaître l'information d'état de la station esclave.

On a ainsi décrit un procédé de synchronisation de stations MLS utilisant la station DME qui leur est associée. Un avantage de ce mode de synchronisation, outre les avantages déjà décrits, tient au fait que les impulsions normalisées engendrées par les stations DME ont des fronts raides, ce qui confère une grande précision à la synchronisation.

La description faite ci-dessus ne l'a été bien entendu qu'à titre d'exemple non limitatif. C'est ainsi notamment que peuvent être transmises entre les stations MLS et l'extérieur, via la station DME, d'autres informations que la synchronisation ou des informations d'état, comme la télécommande ou le télécontrôle des stations MLS à partir de la tour de contrôle de l'aéroport, à condition d'ajouter les émetteurs et récepteurs du type DME aux endroits nécessaires.

16

REVENDICATIONS

1. Procédé de synchronisation radioélectrique d'au moins deux stations d'un système d'aide à l'atterrissage de type MLS, l'une des stations, dite station MLS maître, fournissant une information de synchronisation à l'intention de l'autre station, dite station MLS esclave, ledit procédé étant caractérisé par le fait qu'il comporte :

- une étape de transmission de l'information de synchronisation ($S_{YA}$) de la station MLS maître ($A_Z$) à une station de type DME (D) qui lui est associée ;

- une étape d'émission radioélectrique, par la station DME (D), de l'information de synchronisation ($S_{YD}$) codée sous forme d'une pluralité d'impulsions successives, dont l'espacement est spécifique ;

- une étape de réception de l'information radioélectrique de synchronisation par un récepteur de type DME ($D_S$) associé à la station MLS esclave (S), de décodage et de transmission de l'information de synchronisation ($S_{YS}$) à la station MLS esclave.

2. Procédé selon la revendication 1, caractérisé par le fait que l'information de synchronisation est codée sous forme d'une suite de trois impulsions, dont les espacements sont différents des espacements des impulsions DME standard.

3. Procédé selon l'une des revendications précédentes, caractérisé par le fait que la station MLS maître est la station azimut ($A_Z$).

4. Procédé selon l'une des revendications précédentes, caractérisé par le fait qu'il comporte en outre une étape de transmission de l'état de la station MLS esclave à la station MLS maître, cette étape comportant les sous-étapes suivantes :

- transmission de l'information d'état (E) de la station MLS esclave (S) au récepteur DME ($D_S$) qui lui est associé ;

17

- émission radioélectrique, par le récepteur DME ($D_S$), de l'information d'état (E) codée sous forme d'une pluralité d'impulsions successives, dont l'espacement est spécifique ;

- réception de l'information radioélectrique d'état (E) par la station DME (D) associée à la station MLS maître ($A_Z$) ;

- décodage et transmission de l'information d'état par la station DME (D) à la station MLS maître.

5. Station DME (D) pour la mise en oeuvre du procédé selon l'une des revendications 1 à 3, comportant : une antenne ($A_D$) ; un récepteur-décodeur ($R_X$), relié à cette antenne et assurant la reconnaissance des impulsions d'interrogation DME standard ; un codeur (C) assurant la génération d'impulsions DME standard en réponse aux impulsions d'interrogation DME, et un émetteur ($T_X$), relié à l'antenne, assurant l'émission des impulsions engendrées par le codeur ; la station DME étant caractérisée par le fait que le codeur (C) comporte en outre des moyens ($C_{SY}$) de codage de l'information de synchronisation ($S_{YA}$) reçue de la station MLS maître ($A_Z$), sous forme d'une pluralité d'impulsions successives dont l'espacement est spécifique.

6. Récepteur de type DME ($D_S$) pour la mise en oeuvre du procédé selon l'une des revendications 1 à 3, caractérisé par le fait qu'il comporte :

- une antenne ($A_S$) apte à recevoir les émissions de la station DME (D) ;

- un récepteur-décodeur ($R_{XS}$) relié à cette antenne, assurant la reconnaissance de l'information de synchronisation codée et émise par la station DME (D) et fournissant un signal de synchronisation dit maître ($S_M$).

7. Récepteur selon la revendication 6, caractérisé par le fait qu'il comporte de plus :

- une horloge locale (H) ;

0191657

18

- des moyens de génération (21) d'une période de cycle MLS à partir des signaux de l'horloge locale, fournissant un signal de synchronisation dit esclave ($S_E$), fourni à la station MLS esclave (S).

8. Récepteur selon la revendication 7, caractérisé par le fait qu'il comporte de plus des moyens d'asservissement (22-29) du signal de synchronisation esclave ($S_E$) sur le signal de synchronisation maître ($S_M$).

9. Récepteur selon la revendication 8, caractérisé par le fait que les moyens d'asservissement assurent la conservation de la périodicité du signal de synchronisation esclave ($S_E$) en l'absence du signal de synchronisation maître ($S_M$), assurant ainsi l'autonomie du récepteur.

10. Récepteur selon la revendication 9, caractérisé par le fait qu'il comporte des moyens (31) pour limiter dans le temps l'autonomie du récepteur à une durée prédéterminée.

Fig.1

Fig.2

Fig.3

Fig.4a

Fig.4b

Fig.4c

Fig. 5

Office européen
des brevets

**RAPPORT DE RECHERCHE EUROPEENNE**

Numero de la demande

EP 86 40 0022

## DOCUMENTS CONSIDERES COMME PERTINENTS

| Catégorie | Citation du document avec indication, en cas de besoin. des parties pertinentes | Revendication concernee | CLASSEMENT DE LA DEMANDE (Int. Cl.⁴) |
|---|---|---|---|
| A | EP-A-0 082 770 (THOMSON CSF) * Page 4, ligne 21 - page 5, ligne 25 * ----- | 1 | G 01 S 1/56 |
|  |  |  | DOMAINES TECHNIQUES RECHERCHES (Int. Cl.⁴) |
|  |  |  | G 01 S |

Le présent rapport de recherche a été établi pour toutes les revendications

| Lieu de la recherche LA HAYE | Date d'achèvement de la recherche 25-04-1986 | Examinateur MARCHAU M.F. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : theorie ou principe à la base de l'invention
E : document de brevet antérieur. mais publié à la date de dépôt ou après cette date
D : cité dans la demande
L : cité pour d'autres raisons

& : membre de la même famille. document correspondant

OEB Form 1503 03 82